# EUROPÄISCHE PATENTSCHRIFT

(11) **EP 2 199 608 B1**
(45) Veröffentlichungstag und Bekanntmachung des Hinweises auf die Patenterteilung: **30.04.2014**
(21) Anmeldenummer: 08022143.5
(22) Anmeldetag: 19.12.2008
(51) Int. Cl.: F03D 11/00

(54) **Windkraftanlage und Verfahren zum Betreiben einer Hindernis-oder Gefahrenbefeuerung einer Windkraftanlage**
Wind power plant and method for operating obstacle or danger warning lights of a wind power plant
Eolienne et procédé de fonctionnement d'un balisage d'obstacle ou de danger d'une éolienne

(43) Veröffentlichungstag der Anmeldung: 23.06.2010
(73) Patentinhaber: Siemens Aktiengesellschaft, 80333 München (DE)
(72) Erfinder: Wulff, Steffen, 28217 Bremen (DE)

(56) Entgegenhaltungen:
- DE-A1- 10 125 270
- DE-U1- 20 008 289
- US-A1- 2003 043 585
- VON ELM D: "Allgemeine Verwaltungsvorschrift zur Kennzeichnung von Luftfahrthindernissen" LUFTRECHT ONLINE,, 1. Dezember 2007 (2007-12-01), Seiten 1-23, XP007909267

## Beschreibung

Ab einer gewissen Höhe müssen Bauwerke in Abhängigkeit vom Standort mit einer Hindernis- oder Gefahrenbefeuerung versehen werden. In Deutschland sind die hierfür vorgesehenen Richtlinien in der "Allgemeinen Verwaltungsvorschrift zur Kennzeichnung von Luftfahrthindernissen" zusammengefasst. Insbesondere ist nachts eine rote Befeuerung vorgesehen. Tagsüber kann eine weiße Befeuerung erfolgen.

Aus der DE 200 08 289 U1 ist eine Flugbefeuerungseinrichtung an Windenergieanlagen bekannt. An der Windenergieanlage ist ein Leuchtmittel angebracht. Der Helligkeitswert wird mit z. B. mit einem Dämmerungsschalter erfasst und ist mit einer Schalteinrichtung verbunden. Diese wertet gemessene Daten aus und schaltet die Flugbefeuerung ein, wenn ein bestimmter Helligkeitswert unterschritten wird.

In EP 1 282 888 B1 ist eine Befeuerungsanlage an Windkraftanlagen beschrieben, die eine Einrichtung zum Erfassen des Helligkeitswertes in der Umgebung der Befeuerungseinrichtung umfasst. Weiterhin ist eine Schalteinrichtung vorhanden, die von einem Leuchtmittel einer ersten Farbe auf ein andersfarbiges Leuchtmittel umschaltet, wenn ein bestimmter Helligkeitswert erreicht ist. Damit wird es möglich, während der Abenddämmerung von einer weißen zu einer roten Befeuerung umzuschalten und während der Morgendämmerung von einer roten zu einer weißen Befeuerung.

Gegenüber diesem Stand der Technik ist es Aufgabe der vorliegenden Erfindung, ein vorteilhaftes Verfahren zum Betreiben einer Hindernis- oder Gefahrenbefeuerung einer Windkraftanlage zur Verfügung zu stellen. Es ist eine weitere Aufgabe der vorliegenden Erfindung, eine vorteilhafte Windkraftanlage zur Verfügung zu stellen.

Die erste Aufgabe wird durch ein Verfahren zum Betreiben einer Hindernis- oder Gefahrenbefeuerung einer Windkraftanlage nach Anspruch 1 gelöst, die zweite Aufgabe durch eine Windkraftanlage nach Anspruch 8. Im Rahmen der Erfindung kann eine Windkraftanlage hierbei einer einzelne Windturbine oder ein Windpark mit einer Mehrzahl von Windturbinen sein.

Im erfindungsgemäßen Verfahren zum Betreiben einer Hindernis-oder Gefahrenbefeuerung einer Windkraftanlage, welche eine rote und eine weiße Befeuerung umfasst, wird die rote Befeuerung 24 Stunden am Tag betrieben. Die weiße Befeuerung wird in Abhängigkeit von der Umgebungshelligkeit ein- und ausgeschaltet. Im eingeschalteten Zustand kann die weiße Befeuerung im Rahmen der Erfindung kontinuierlich oder blitzend betrieben werden. Auch die rote Befeuerung kann im Rahmen der Erfindung kontinuierlich oder blitzend betrieben werden.

Erfindungsgemäß erfolgt also im Unterschied zum Stand der Technik kein Umschalten zwischen einer weißen und einer roten Befeuerung, sondern ein Zuschalten der weißen Befeuerung, wenn tagsüber ein bestimmter Helligkeitswert erreicht ist. Diese Ausgestaltung bietet den Vorteil, dass die rote Befeuerung immer verfügbar ist, selbst wenn die weiße Befeuerung ausfallen sollte. Die rote Befeuerung stellt damit ein sofort einspringendes Reservesystem für die weiße Befeuerung dar.

Gegebenenfalls kann die Leuchtintensität der roten Befeuerung über bestimmte Zeitperioden reduziert werden. Insbesondere besteht die Möglichkeit, die Leuchtintensität der roten Befeuerung tagsüber zu reduzieren. Dies kann entweder zeitgesteuert oder in Abhängigkeit von der Umgebungshelligkeit erfolgen.

Alternativ oder zusätzlich kann eine Reduzierung der Leuchtintensität der roten Befeuerung und/oder der weißen Befeuerung in Abhängigkeit von der Sichtweite in der Umgebung der Windkraftanlage erfolgen. Insbesondere bei einer sogenannten Mittelleistungsbefeuerung gemäß der allgemeinen Verwaltungsvorschrift zur Kennzeichnung von Luftfahrthindernissen besteht die Möglichkeit, die Leuchtintensität der Befeuerung auf 30 % der Nennintensität zu reduzieren, wenn die Sichtweite mehr als 5 km beträgt, und auf 10 % der Nennintensität, wenn die Sichtweite mehr als 10 km beträgt. Das Reduzieren der Befeuerung bei guter Sichtweite trägt insbesondere auch dazu bei, Beeinträchtigungen bei Anliegern in der Umgebung der Windkraftanlage, die aufgrund der Befeuerung entstehen, zu Vermindern. Insbesondere bei der im Rahmen der Erfindung möglichen blitzenden Befeuerung kann eine Reduzierung der Leuchtintensität zu einer höheren Akzeptanz der Windkraftanlage bei Anliegern führen.

Eine erfindungsgemäße Windkraftanlage, die entweder eine einzelne Windturbine oder ein Windpark aus einer Mehrzahl von Windturbinen sein kann, umfasst eine Hindernis- oder Gefahrenbefeuerung, die rote und weiße Befeuerungsleuchten aufweist. Zudem umfasst sie einen Helligkeitssensor, der die Umgebungshelligkeit in der Umgebung der Windkraftanlage umfasst und ein die erfasste Umgebungshelligkeit repräsentierendes Helligkeitssignal produziert. Mit dem Helligkeitssensor ist eine Steuereinrichtung zum Empfang des Helligkeitssignals verbunden. Diese ist zum Steuern des Ein- und Ausschaltens der Befeuerungsleuchten zumindest auf der Basis des Helligkeitssignals ausgestaltet. Hierbei kann eine Befeuerung grundsätzlich kontinuierlich oder blitzend realisiert sein. Erfindungsgemäß ist die Steuereinrichtung derart ausgestaltet, dass die rote Befeuerung 24 Stunden am Tag betrieben wird, sei es blitzend oder kontinuierlich, und die weiße Befeuerung in Abhängigkeit von der erfassten Umgebungshelligkeit ein- und ausgeschaltet wird. Auch die weiße Befeuerung kann hierbei grundsätzlich kontinuierlich oder blitzend sein.

Wie bereits mit Bezug auf das erfindungsgemäße Verfahren geschildert, kann so die rote Befeuerung bei Ausfall der weißen Befeuerung als Notreserve fungieren.

Die Steuereinrichtung kann insbesondere derart ausgestaltet sein, dass sie die Leuchtintensität der roten Befeuerung über bestimmte Zeitperioden reduziert, beispielsweise in Abhängigkeit von der erfassten Umgebungshelligkeit. Alternativ besteht auch die Möglichkeit, dass die Windkraftanlage eine Zeitschaltuhr umfasst, die mit der Steuereinheit zum Übermitteln eines Zeitsignals verbunden ist, und die Steuereinheit derart ausgestaltet ist, dass sie die Leuchtintensität der roten Befeuerung zeitgesteuert reduziert. Auf diese Weise lässt sich tagsüber die rote Befeuerung auf das für die Erfüllung der Reservefunktion notwendige Mindestmaß reduzieren, wodurch sich eine Störung von Anliegern durch die rote Befeuerung weitgehend vermeiden lässt. Statt mit der Steuereinheit verbunden zu sein, kann die Zeitschaltuhr auch in die Steuereinheit integriert sein.

Die Realisierung einer Reservefunktion der roten Befeuerung ist insbesondere dann möglich, wenn die Windkraftanlage eine mit der Steuereinheit verbundene oder in diese integrierte Überwachungseinrichtung umfasst, die die ordnungsgemäße Funktion der weißen Befeuerung überwacht und im Falle einer nicht ordnungsgemäßen Funktion der weißen Befeuerung ein Störungssignal produziert. Die Steuereinrichtung ist dann derart ausgestaltet, dass sie die Leuchtintensität der roten Befeuerung wieder erhöht, wenn sie ein Störsignal von der Überwachungseinrichtung erhält, während die Leuchtintensität der roten Befeuerung reduziert ist. Auf diese Weise lässt sich verhindern, dass bei einem Ausfall der weißen Befeuerung die Intensität der roten Befeuerung nicht ausreicht, um die Reservefunktion ausführen zu können.

In einer Weiterbildung der erfindungsgemäßen Windkraftanlage umfasst diese einen Sichtweitensensor, der die Sichtweite in der Umgebung der Windkraftanlage umfasst und ein die erfasste Sichtweite repräsentierendes Sichtweitensignal produziert. Die Steuereinheit ist dann mit dem Sichtweitensensor zum Empfang des Sichtweitensignals verbunden und derart ausgestaltet, dass sie die Leuchtintensität der roten Befeuerung und/oder der weißen Befeuerung in Abhängigkeit von dem empfangenen Sichtweitensignal reduziert. Auf diese Weise ist es möglich, die Leuchtintensität der Befeuerung auf dem minimalen zur Erfüllung der Hinweis- oder Warnfunktion erforderlichen Wert zu reduzieren. Auf diese Weise lässt sich die Akzeptanz der Befeuerung bei Anliegern erhöhen.

Weitere Merkmale, Eigenschaften und Vorteile der vorliegenden Erfindung ergeben sich aus der nachfolgenden Beschreibung von Ausführungsbeispielen unter Bezugnahme auf die beiliegende Figuren.
Figur 1 zeigt als ein Beispiel für eine erfindungsgemäße Windkraftanlage eine Windturbine mit einer Hindernis- oder Gefahrenbefeuerung.
Figur 2 zeigt die Hindernis- oder Gefahrenbefeuerung im Detail in einer ersten Ausführungsvariante.
Figur 3 zeigt die Hindernis- oder Gefahrenbefeuerung im Detail in einer zweiten Variante.
Figur 4 zeigt eine erste Ausführungsvariante für die Steuerung der Hindernis- oder Gefahrenbefeuerung als Blockschaltbild.
Figur 5 zeigt eine zweite Ausführungsvariante für die Steuerung der Hindernis- oder Gefahrenbefeuerung als Blockschaltbild.
Figur 6 zeigt eine dritte Ausführungsvariante für die Steuerung der Hindernis- oder Gefahrenbefeuerung als Blockschatbild.

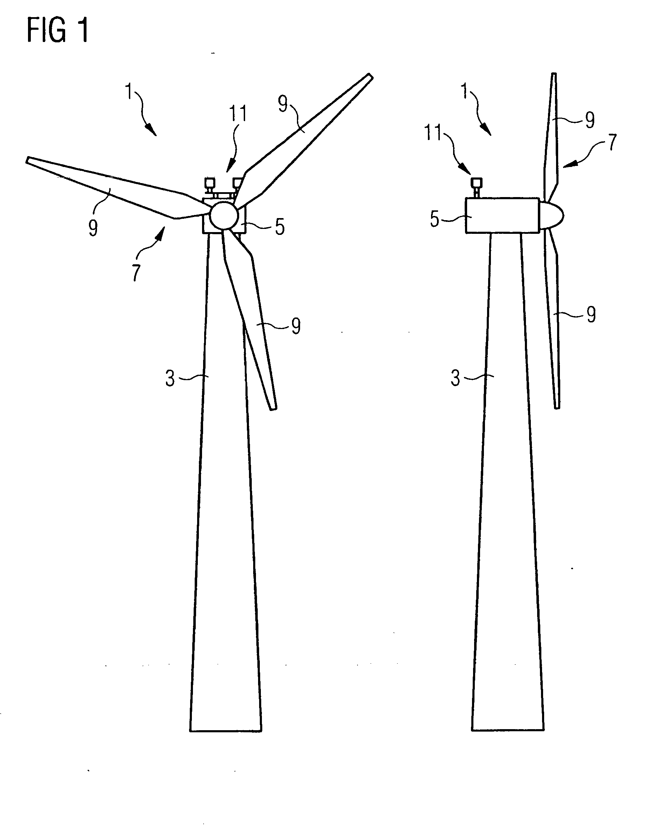

Als ein Ausführungsbeispiel für eine erfindungsgemäße Windkraftanlage ist in Figur 1 schematisch eine Windturbine mit einer Hindernis- oder Gefahrenbefeuerung dargestellt.

Die Windturbine 1 umfasst als Hauptbestandteile einen Turm 3, eine am oberen Ende des Turms 3 horizontal drehbar gelagerte Gondel 5 sowie einen an der Gondel 5 um eine weitestgehend horizontal verlaufende Achse drehbar gelagerten Rotor 7, der im vorliegenden Ausführungsbeispiel drei Rotorblätter 9 umfasst. Der Rotor 7 braucht aber nicht notwendigerweise drei Rotorblätter 9 zu umfassen. Die Zahl der Rotorblätter kann stattdessen kleiner oder größer sein als die des in der Figur gezeigten Rotors 7. Hauptsächlich kommen heutzutage jedoch zweiblättrige Rotoren und insbesondere dreiblättrige Rotoren zur Anwendung.

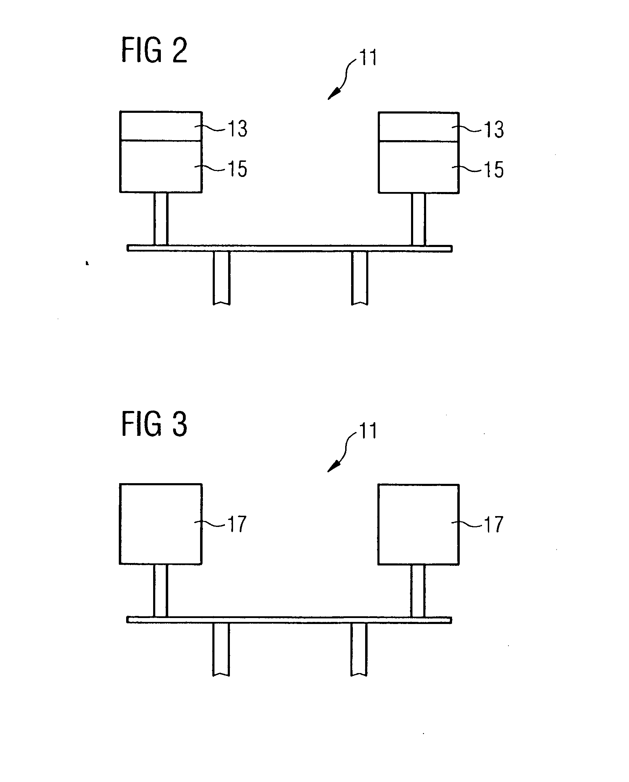

Auf der Oberseite der Gondel 5 weist die Windturbine 1 eine Hindernis- oder Gefahrenbefeuerung 11 auf, welche eine rote und eine weiße Befeuerung umfasst. Die Hindernis- oder Gefahrenbefeuerung 11 ist in der Figur 2 im Detail dargestellt. Sie umfasst insgesamt vier Leuchtkörper, nämlich zwei rote Leuchtkörper 13, welche die rote Befeuerung bilden, und zwei weiße Leuchtkörper 15, welche die weiße Befeuerung bilden. Als Leuchtkörper kommen insbesondere aus einer oder mehreren Leuchtdioden aufgebaute Leuchtkörper in Betracht. Diese können je nach Anforderung entweder kontinuierlich oder gepulst (blitzend) betrieben werden. Ob ein gepulster oder blitzender Betrieb erfolgt, richtet sich dabei nach den jeweils geltenden Bestimmungen. Außerdem können auch rote und/oder weiße Leuchtkörper der Hindernis- oder Gefahrenbefeuerung 11 am Turm 3 angebracht sein, wenn die jeweils geltenden Bestimmungen dies erfordern.

Eine alternative Variante der Hindernis- oder Gefahrenbefeuerung 11 ist in Figur 3 dargestellt. Im Unterschied zu der in Figur 2 dargestellten Variante sind nur zwei Leuchtkörper 17 vorhanden, die sowohl zur Abgabe von weißem Licht, als auch zur Abgabe von rotem Licht geeignet sind.

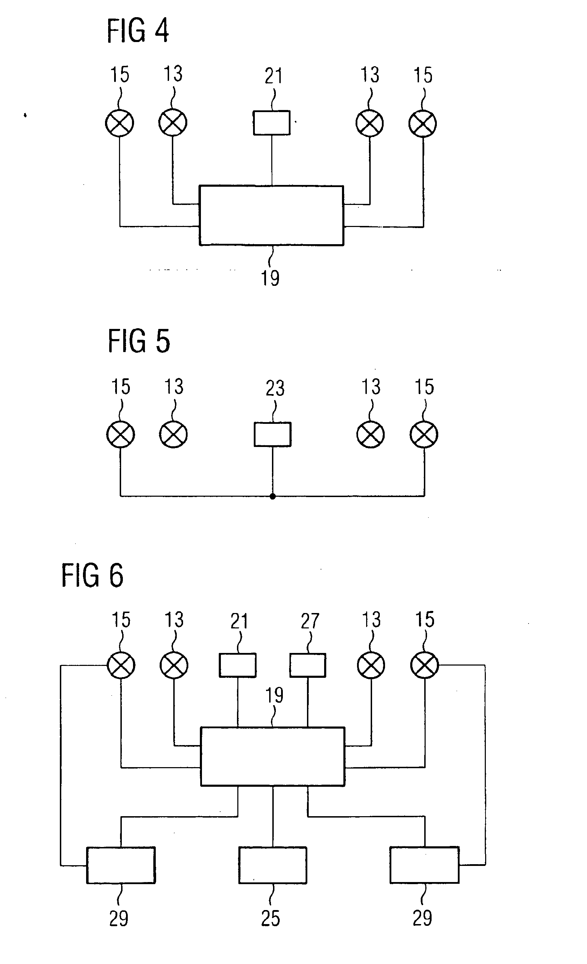

Eine erste Ausführungsvariante für das Betreiben der Hindernis- oder Gefahrenbefeuerung 11 wird nachfolgend mit Bezug auf Figur 4 beschrieben, die ein Blockdiagramm der Steuerung für die Hindernis- oder Gefahrenbefeuerung 11 zeigt. Im Blockdiagramm sind die roten und weißen Leuchtkörper 13, 15 schematisch dargestellt. Sie sind mit einer Steuereinheit 19 verbunden, mit der auch ein Helligkeitssensor 21 verbunden ist, der so an der Windkraftanlage 1 angeordnet ist, dass er die Helligkeit in er Umgebung der Windkraftanlage 1 erfassen kann. Der Helligkeitssensor 21 produziert ein die erfasste Umgebungshelligkeit repräsentierendes Helligkeitssignal, dass an die Steuereinheit 19 ausgegeben wird. Auf der Basis des empfangenen Helligkeitssignals wird die weiße Befeuerung 15 tagsüber zugeschaltet, d.h. wenn die erfasste Umgebungshelligkeit einen bestimmten Wert überschreitet, und nachts abgeschaltet, d.h. wenn die erfasste Umgebungshelligkeit einen vorgegebenen Schwellenwert unterschreitet. Die rote Befeuerung 13 wird hingegen so gesteuert, dass sie 24 Stunden am Tag eingeschaltet ist. Im vorliegenden Ausführungsbeispiel reduziert die Steuereinheit 19 jedoch die Leuchtintensität der roten Befeuerung 13, wenn die weiße Befeuerung 15 eingeschaltet wird. Wenn am Abend die weiße Befeuerung ausgeschaltet wird, wird die Leuchtintensität der roten Befeuerung wieder erhöht. Das Absenken und erhöhen der Leuchtintensität der roten Befeuerung 13 kann auf der Basis desselben Helligkeitssignals erfolgen, wie das Ein- und Ausschalten der weißen Befeuerung 15.

Eine vereinfachte Variante der Steuerung der Hindernis- oder Gefahrenbefeuerung 11 ist in Figur 5 dargestellt. In dieser Variante ist lediglich ein Dämmerungssensor 23 vorhanden, der mit der weißen Befeuerung 15 verbunden ist und die weiße Befeuerung 15 einschaltet, wenn eine Schaltschwelle von 50 bis 100 Lux überschritten ist, und die weiße Befeuerung 15 ausschaltet, wenn die Schaltschwelle von 50 bis 100 Lux unterschritten wird. Die rote Befeuerung 13 wird in diesem Ausführungsbeispiel hingegen bei Tag und bei Nacht mit derselben Leuchtintensität betrieben.

Ein drittes Ausführungsbeispiel für die Steuerung der Hindernis- oder Gefahrenbefeuerung 11 ist in Figur 6 dargestellt. Gegenüber der in Figur 4 dargestellten Ausführungsform sind zusätzlich eine Zeitschaltuhr 25 und ein Sichtweitensensor 27 mit der Steuereinheit 19 verbunden. Die Zeitschaltuhr 25 übernimmt im vorliegenden Ausführungsbeispiel das Absenken der Leuchtintensität der roten Befeuerung. Dadurch kann eine Absenkung der Leuchtkraft unabhängig von der erfassten Helligkeit vorgenommen werden, beispielsweise wenn eine Störung von Anliegern durch die rote Befeuerung nur zu bestimmten Tageszeiten zu erwarten ist.

Mittels des Sichtweitensensors 27 wird die Sichtweite in der Umgebung der Windkraftanlage ermittelt. Der Sichtweitensensor 27 produziert ein die erfasste Sichtweite repräsentierende Sichtweitensignal, welches an die Steuereinheit 19 ausgegeben wird. Wenn die Sichtweite eine bestimmte Sichtweitenschwelle überschreitet, wird im vorliegenden Ausführungsbeispiel die Leuchtintensität reduziert. Falls es Nacht ist, wird hierbei die Leuchtintensität der roten Befeuerung 13 reduziert, falls es Tag ist, die Leuchtintensität der weißen Befeuerung 15 und ggf. der roten Befeuerung 13, falls diese nicht sowieso tagsüber reduziert ist. Insbesondere kann die Reduktion in Stufen erfolgen, wenn mehrere Sichtweitenschwellen vorhanden sind. So ist es beispielsweise möglich, die Leuchtintensität der roten und/oder weißen Befeuerung auf 30 % der Nennleistung zu reduzieren, wenn die erfasste Sichtweite 5.000 m überschreitet, und auf 10 % der Nennleistung zu reduzieren, wenn die erfasste Sichtweite 10.000 m überschreitet.

Weiterhin umfasst das in Figur 6 dargestellte Ausführungsbeispiel zwei Überwachungseinrichtungen 29, welche mit der weißen Befeuerung 15 zum Überwachen der ordnungsgemäßen Funktion verbunden sind. Außerdem sind die beiden Überwachungseinrichtungen 29 mit der Steuereinheit 19 verbunden. Falls eine der Überwachungseinrichtungen 29 eine Störung der von ihr überwachten weißen Befeuerung 15 feststellt, gibt sie ein Störungssignal an die Steuereinheit 19 aus, die daraufhin die Leuchtintensität der entsprechenden roten Befeuerung 13 erhöht, falls diese reduziert ist, wenn die Störung der weißen Befeuerung festgestellt wird. Statt zwei getrennter Überwachungseinrichtungen 29, die jeweils einen der weißen Befeuerungsleuchtkörper überwachen, ist es auch möglich, eine einzige Überwachungseinrichtung vorzusehen, die mehrere oder alle weißen Befeuerungsleuchtkörper 15 überwacht.

Die Steuereinheit 19, die Zeitschaltuhr 25 sowie die Überwachungseinheiten 29 können entweder in Form von fest verdrahter Hardware oder in Form von auf einer universellen Hardware installierten Programmen realisiert sein.

Weiterhin ist es möglich, im Falle eines Windparks jede Windturbine 1 individuell mit einer der in den Figuren 4 bis 6 dargestellten Steuerungen zu versehen. Alternativ besteht auch die Möglichkeit mehrere oder alle Windturbinen des Windparks zusammenzufassen und mit einer gemeinsamen Steuerung gemäß einem der Ausführungsbeispiele zu versehen.

## Patentansprüche

1. Verfahren zum Betreiben einer Hindernis- oder Gefahrenbefeuerung (11) einer Windkraftanlage (1), welche eine rote Befeuerung (13) und eine weiße Befeuerung (15) umfasst,
**dadurch gekennzeichnet, dass**
die rote Befeuerung (13) 24 Stunden am Tag betrieben wird und die weiße Befeuerung (15) in Abhängigkeit von der Umgebungshelligkeit ein- und ausgeschaltet wird.

2. Verfahren nach Anspruch 1,
**dadurch gekennzeichnet, dass**
die Leuchtintensität der roten Befeuerung (13) über bestimmte Zeitperioden reduziert wird.

3. Verfahren nach Anspruch 2,
**dadurch gekennzeichnet, dass**
das Reduzieren der Leuchtintensität der roten Befeuerung (13) zeitgesteuert erfolgt.

4. Verfahren nach Anspruch 2 oder 3,
**dadurch gekennzeichnet, dass**
eine Steuerung des Reduzierens der Leuchtintensität der roten Befeuerung (13) in Abhängigkeit von der Umgebungshelligkeit erfolgt.

5. Verfahren nach einem der Ansprüche 2 bis 4,
**dadurch gekennzeichnet, dass**
die Leuchtintensität der roten Befeuerung (13) erhöht wird, wenn sich die Leuchtintensität der weißen Befeuerung (15) außerplanmäßig verringert, während die Leuchtintensität der roten Befeuerung (13) reduziert ist.

6. Verfahren nach einem der Ansprüche 1 bis 5,
**dadurch gekennzeichnet, dass**
eine Reduzierung der Leuchtintensität der roten Befeuerung (13) und/oder der weißen Befeuerung (15) in Abhängigkeit von der Sichtweite in der Umgebung der Windkraftanlage (1) erfolgt.

7. Verfahren nach einem der Ansprüche 1 bis 6,
**dadurch gekennzeichnet, dass**
die Befeuerung blitzend erfolgt.

8. Windkraftanlage (1) mit:
- einer Hindernis- oder Gefahrenbefeuerung (11), die rote Beleuchtungsleuchten (13) und weiße Befeuerungsleuchten (15) umfasst,
- einem Helligkeitssensor (21), der die Umgebungshelligkeit in der Umgebung der Windkraftanlage (1) erfasst und ein die erfasste Umgebungshelligkeit repräsentierendes Helligkeitssignal produziert, und
- einer Steuereinrichtung (19), die mit dem Helligkeitssensor (21) zum Empfang des Helligkeitssignals verbunden ist und die zum Steuern des Ein- und Ausschaltens der Befeuerungsleuchten (13, 15) zumindest auf der Basis des Helligkeitssignals ausgestaltet ist,
**dadurch gekennzeichnet, dass** die Steuereinrichtung (19) derart ausgestaltet ist, dass die rote Befeuerung (13) 24 Stunden am Tag betrieben wird und die weiße Befeuerung (15) in Abhängigkeit von der erfassten Umgebungshelligkeit ein- und ausgeschaltet wird.

9. Windkraftanlage (1) nach Anspruch 8,
**dadurch gekennzeichnet, dass**
die Steuereinrichtung (19) derart ausgestaltet ist, dass sie die Leuchtintensität der roten Befeuerung (13) über bestimmte Zeitperioden reduziert.

10. Windkraftanlage (1) nach Anspruch 9,
**dadurch gekennzeichnet, dass**
Steuereinrichtung (19) derart ausgestaltet ist, dass sie die Leuchtintensität der roten Befeuerung (13) in Abhängigkeit von der erfassten Umgebungshelligkeit reduziert.

11. Windkraftanlage (1) nach Anspruch 9 oder Anspruch 10,
**dadurch gekennzeichnet, dass**
sie eine Zeitschaltuhr (25) umfasst, die mit der Steuereinheit (19) zum Übermitteln eines Zeitsignals verbunden oder in diese integriert ist, und die Steuereinrichtung (19) derart ausgestaltet ist, dass sie die Leuchtintensität der roten Befeuerung (13) zeitgesteuert reduziert.

12. Windkraftanlage (1) nach einem der Ansprüche 9 bis 11, **dadurch gekennzeichnet, dass**
- sie eine mit der Steuereinheit (19) verbundene oder in diese integrierte Überwachungseinrichtung (29) umfasst, die die ordnungsgemäße Funktion der weißen Befeuerung (15) überwacht und im Falle einer nicht ordnungsgemäßen Funktion der weißen Befeuerung ein Störungssignal produziert, und
- die Steuereinrichtung (19) derart ausgestaltet ist, dass sie die Leuchtintensität der roten Befeuerung (13) wieder erhöht, wenn sie ein Störsignal von der Überwachungseinrichtung (29) erhält, während die Leuchtintensität der roten Befeuerung (13) reduziert ist.

13. Windkraftanlage (1) nach einem der Ansprüche 8 bis 12, **dadurch gekennzeichnet, dass**
- sie eine Sichtweitensensor (27) umfasst, der die Sichtweite in der Umgebung der Windkraftanlage (1) erfasst und ein die erfasste Sichtweite repräsentierendes Sichtweitensignal produziert, und
- die Steuereinrichtung (19) mit dem Sichtweitensensor (27) zum Empfang des Sichtweitensignals verbunden ist und derart ausgestaltet ist, dass sie die Leuchtintensität der roten Befeuerung (13) und/oder der weißen Befeuerung (15) in Abhängigkeit von dem empfangenen Sichtweitensignal reduziert.

## Claims

1. Method for operating obstacle or hazard lighting (11) of a wind power plant (1), comprising a red beacon unit (13) and a white beacon unit (15),
**characterised in that**
the red beacon unit (13) is operated 24 hours a day and the white beacon unit (15) is switched on and off depending on the ambient brightness.

2. Method according to claim 1,
**characterised in that**
the light intensity of the red beacon unit (13) is reduced over certain time periods.

3. Method according to claim 2,
**characterised in that**
the reduction of the light intensity of the red beacon unit (13) takes place on a time-controlled basis.

4. Method according to claim 2 or 3,
**characterised in that**
control of the reduction of the light intensity of the red beacon unit (13) takes place depending on the ambient brightness.

5. Method according to one of claims 2 to 4,
**characterised in that**
the light intensity of the red beacon unit (13) is increased, if the light intensity of the white beacon unit (15) diminishes to an unplanned degree, while the light intensity of the red beacon unit (13) is reduced.

6. Method according to one of claims 1 to 5,
**characterised in that**
a reduction of the light intensity of the red beacon unit (13) and/or of the white beacon unit (15) takes place, depending on the visibility in the vicinity of the wind power plant (1).

7. Method according to one of claims 1 to 6,
**characterised in that**
the lighting takes place in a flashing manner.

8. Wind power plant (1) with:
- obstacle or hazard lighting (11), comprising red beacon lamps (13) and white beacon lamps (15),
- a brightness sensor (21), which detects the ambient brightness in the vicinity of the wind power plant (1) and produces a brightness signal representing the detected ambient brightness, and
- a control device (19), which is connected to the brightness sensor (21) for reception of the brightness signal and is configured to control the switching on and off of the beacon lamps (13, 15), at least on the basis of the brightness signal,
**characterised in that**
the control device (19) is embodied in such a way that the red beacon unit (13) is operated 24 hours a day and the white beacon unit (15) is switched on and off depending on the detected ambient brightness.

9. Wind power plant (1) according to claim 8,
**characterised in that**
the control device (19) is embodied in such a way that it reduces the light intensity of the red beacon unit (13) over certain time periods.

10. Wind power plant (1) according to claim 9,
**characterised in that**
control device (19) is embodied in such a way that it reduces the light intensity of the red beacon unit (13) depending on the ambient brightness detected.

11. Wind power plant (1) according to claim 9 or claim 10,
**characterised in that**
it comprises a time switch (25), which is connected to the control unit (19) or integrated into the same for the transmission of a time signal, and the control device (19) is embodied in such a way that it reduces the light intensity of the red beacon unit (13) on a time-controlled basis.

12. Wind power plant (1) as claimed in one of claims 9 to 11,
**characterised in that**
- it comprises a monitoring device (29) connected to the control unit (19) or integrated into the same, which monitors the proper functioning of the white beacon unit (15) and in the case of improper functioning of the white beacon unit produces a fault signal, and
- the control device (19) is embodied in such a way that it once more increases the light intensity of the red beacon unit (13), if it receives a fault signal from the monitoring device (29), while the light intensity of the red beacon unit (13) is reduced.

13. Wind power plant (1) as claimed in one of claims 8 to 12,
**characterised in that**
- it comprises a visibility sensor (27), which detects the visibility in the vicinity of the wind power plant (1) and produces a visibility signal representing the detected visibility, and
- the control device (19) is connected to the visibility sensor (27) for reception of the visibility signal and is embodied in such a way that it reduces the light intensity of the red beacon unit (13) and/or of the white beacon unit (15) depending on the visibility signal received.

## Revendications

1. Procédé de fonctionnement d'un balisage d'obstacle ou de danger (11) d'une éolienne (1) lequel comprend un balisage rouge (13) et un balisage blanc (15),
**caractérisé en ce que**
le balisage rouge (13) fonctionne 24 heures sur 24 et le balisage blanc (15) est activé et désactivé en fonction de la luminosité ambiante.

2. Procédé selon la revendication 1,
**caractérisé en ce que**
l'intensité lumineuse du balisage rouge (13) est réduite pendant certaines périodes.

3. Procédé selon la revendication 2,
**caractérisé en ce que**
la réduction de l'intensité lumineuse du balisage rouge (13) a lieu de façon programmée dans le temps.

4. Procédé selon la revendication 2 ou 3,
**caractérisé en ce que**
une commande de la réduction de l'intensité lumineuse du balisage rouge (13) a lieu en fonction de la luminosité ambiante.

5. Procédé selon l'une des revendications 2 à 4,
**caractérisé en ce que**
l'intensité lumineuse du balisage rouge (13) est augmentée lorsque l'intensité lumineuse du balisage blanc (15) diminue de façon inattendue alors que l'intensité lumineuse du balisage rouge (13) est réduite.

6. Procédé selon l'une des revendications 1 à 5,
**caractérisé en ce que**
une réduction de l'intensité lumineuse du balisage rouge (13) et/ou du balisage blanc (15) a lieu en fonction de la visibilité aux environs de l'éolienne (1).

7. Procédé selon l'une des revendications 1 à 6,
**caractérisé en ce que**
le balisage est clignotant.

8. Eolienne (1) comprenant :
- un balisage d'obstacle ou de danger (11) qui comprend des feux de balisage rouges (13) et des feux de balisage blancs (15),
- un capteur de luminosité (21) qui détecte la luminosité ambiante aux environs de l'éolienne (1) et produit un signal de luminosité représentant la luminosité ambiante détectée, et
- un dispositif de commande (19) qui est relié au capteur de luminosité (21) afin de recevoir le signal de luminosité et qui est conçu pour activer et désactiver les feux de balisage (13, 15) au moins sur la base du signal de luminosité,
**caractérisée en ce que**
le dispositif de commande (19) est conçu de telle façon que le balisage rouge (13) fonctionne 24 heures sur 24 et que le balisage blanc (15) est activé et désactivé en fonction de la luminosité ambiante détectée.

9. Eolienne (1) selon la revendication 8,
**caractérisée en ce que**
le dispositif de commande (19) est conçu de telle façon qu'il réduit l'intensité lumineuse du balisage rouge (13) pendant certaines périodes.

10. Eolienne (1) selon la revendication 9,
**caractérisée en ce que**
le dispositif de commande (19) est conçu de telle façon qu'il réduit l'intensité lumineuse du balisage rouge (13) en fonction de la luminosité ambiante détectée.

11. Eolienne (1) selon la revendication 9 ou la revendication 10,
**caractérisée en ce que**
elle comprend un minuteur (25) qui est relié au dispositif de commande (19) ou intégré dans celui-ci afin de transmettre un signal de temps, et le dispositif de commande (19) est conçu de telle façon qu'il réduit l'intensité lumineuse du balisage rouge (13) de façon programmée dans le temps.

12. Eolienne (1) selon l'une des revendications 9 à 11, **caractérisée en ce que**
- elle comprend un dispositif de surveillance (29) relié au dispositif de commande (19) ou intégré dans celui-ci, qui surveille le bon fonctionnement du balisage blanc (15) et produit un signal de dysfonctionnement en cas de dysfonctionnement du balisage blanc, et
- le dispositif de commande (19) est conçu de telle façon qu'il augmente à nouveau l'intensité lumineuse du balisage rouge (13) lorsqu'il reçoit un signal de dysfonctionnement du dispositif de surveillance (29) alors que l'intensité lumineuse du balisage rouge (13) est réduite.

13. Eolienne (1) selon l'une des revendications 8 à 12, **caractérisée en ce que**
- elle comprend un capteur de visibilité (27) qui détecte la visibilité aux environs de l'éolienne (1) et produit un signal de visibilité représentant la visibilité détectée, et
- le dispositif de commande (19) est relié au capteur de visibilité (27) afin de recevoir le signal de visibilité et est conçu de telle façon qu'il réduit l'intensité lumineuse du balisage rouge (13) et/ou du balisage blanc (15) en fonction du signal de visibilité reçu.
